# EUROPÄISCHE PATENTSCHRIFT

(11) **EP 0 850 171 B1**
(45) Veröffentlichungstag und Bekanntmachung des Hinweises auf die Patenterteilung: **17.03.1999**
(21) Anmeldenummer: 96932369.0
(22) Anmeldetag: 03.10.1996
(51) Int. Cl.: B64G 1/22, B64G 1/64, H01Q 1/28

(54) **ANTRIEBSEINRICHTUNG ZUM VERSTELLEN VON ZU ORIENTIERENDEN BAUTEILEN EINES SATELLITEN**
DRIVE UNIT FOR ADJUSTING SATELLITE COMPONENTS REQUIRING ORIENTATION
DISPOSITIF DE COMMANDE POUR AJUSTER DES COMPOSANTS A ORIENTER D'UN SATELLITE

(30) Priorität: 04.10.1995 AT 538/95 U
(43) Veröffentlichungstag der Anmeldung: 01.07.1998
(73) Patentinhaber: Austrian Aerospace GmbH, 1120 Wien (AT)
(72) Erfinder: SUPPER, Ludwig, A-1170 Wien (AT); SCHWARZINGER, Christian, A-2352 Gumpoldskirchen (AT)
(74) Vertreter: Haffner, Thomas M., Dr.
(86) Internationale Anmeldenummer: AT9600181
(87) Internationale Veröffentlichungsnummer: WO9712806

(56) Entgegenhaltungen:
- EP-A- 0 043 772
- EP-A- 0 424 937
- EP-A- 0 515 888
- FR-A- 2 502 404
- GB-A- 2 127 624
- US-A- 5 131 611

## Beschreibung

Die Erfindung bezieht sich auf eine Antriebseinrichtung zum Verstellen von zu orientierenden Bauteilen eines Satelliten, wie z.B. Triebwerken, Antennen oder Solarzellen.

Zur Korrektur von Fehlstellungen eines Satelliten ist es bekannt, am Satelliten eine Reihe von Triebwerken anzuordnen. Neben chemischen Triebwerken, welche hohe Massen an Treibstoff im Betrieb auswerfen, sind auch Ionentriebwerke im Einsatz, welche relativ lang in Betrieb gesetzt werden müssen, um eine Korrektur zu erzielen. Ionentriebwerke bauen in der Regel schwerer als chemische Treibsätze. Da Ionentriebwerke geringe Edelgasmengen ausstoßen, ist der Bedarf an mitzuführendem Treibstoff, nämlich Edelgasen, massenmäßig geringer, wenn der Antrieb über einen längeren Zeitraum funktionsfähig sein soll. Den schwerer bauenden Ionentriebwerken steht somit ein Gewichtsvorteil in bezug auf die mitzuführende Treibstoffmenge gegenüber, sodaß für eine Reihe von Korrekturen mittlerweile auch schwer bauende Ionentriebwerke besonders bei Satelliten zum Einsatz gelangen, deren Betriebszeit im All höher ist als die bisheriger Satelliten.

Die chemischen Triebwerke bekannter Bauart werden in der Regel pulsierend betrieben, um auf diese Weise Fehlstellungen zu korrigieren. Wesentlich für die Korrektur von Fehlstellungen ist es aber, daß unerwünschte Bewegungen, insbesondere unerwünschte Rotationsbewegungen, während des Betriebs oder in Folge des Betriebs des Triebwerkes mit Sicherheit verhindert werden. Die Triebwerke müssen daher in exakter Weise ausgerichtet werden, wobei die Triebwerkskräfte mit dem sich im Betrieb veränderlichen Schwerpunkt des Satelliten in fluchtende Relation gebracht werden müssen. Da die Schwerpunktslage selbst sich beispielsweise durch Verbrauch von Treibstoff verändert und umgekehrt auch die Triebwerke in ihrer axialen Ausrichtung, bedingt durch äußere Einflüsse und durch Verschleiß der Triebwerke, Änderungen unterworfen sind, muß die relative Lage der durch Betätigung des Triebwerkes wirksamen Kräfte in Relation zum sich ändernden Schwerpunkt aufgrund von resultierenden Bewegungen des Satelliten immer wieder erfaßt werden, um auf diese Weise weitere Korrekturmaßnahmen zu setzen. Wesentlich für derartige Korrekturen ist aber eine einfache, betriebssichere und leichte Antriebseinrichtung, mit welcher die gewünschten Korrekturen durch Ausrichtung von Triebwerken vorgenommen werden können.

Neben relativ schwer bauenden Ionentriebwerken sind auch andere Bauteile, wie beispielsweise Antennen oder Solarzellen, im Bedarfsfalle zu orientieren, wobei auch hier ein kompakter, einfach bauender und möglichst störungsunempfindlicher Antrieb auch zur Bewegung größerer Einrichtungen gefordert wird.

Die Erfindung zielt nun darauf ab, eine Antriebseinrichtung der eingangs genannten Art zu schaffen, bei welcher mit einer geringen Anzahl einfacher und betriebssicherer, sowie leicht bauender Bauteile auch relativ schwere, zu orientierende Bauteile eines Satelliten sicher in die gewünschte Orientierung gebracht werden können.

Zur Lösung dieser Aufgabe besteht die erfindungsgemäße Ausbildung im wesentlichen darin, daß der Antrieb zwei unabhängig voneinander betreibbare Linearantriebe mit kardanisch an den Linearantrieben angelenkten Lenkstangen, welche an verschiedenen Punkten des Bauteiles über Kugelgelenke abgestützt oder kardanisch angelenkt sind, sowie wenigstens eine Stützstange umfaßt, wobei die Stützstange(n) sowohl am Satelliten als auch am zu orientierenden Bauteil an verschiedenen Punkten über Kugelgelenke abgestützt oder kardanisch angelenkt sind und/oder der zu orientierende Bauteil direkt am Satelliten in einem Punkt über ein Kugelgelenk abgestützt oder kardanisch angelenkt ist und daß die Lenkstangen und die Stützstange(n) an ein Polygon aufspannenden Punkten des zu orientierenden Bauteiles angreifen, wobei die Winkelstellung der Lenkstangen (5, 6) untereinander und im bezug auf die Linearantriebe (9, 10) so gewählt ist, daß Winkelverstellungen des Bauteiles gegenüber dem Satelliten um mehrere Achsen mäglich sind. Dadurch, daß zwei Linearantriebe vorgesehen sind, kann mit einfachen und kompakt bauenden Antrieben das Auslangen gefunden werden. Dadurch, daß die Lenkstangen, welche mit den Linearantrieben verbunden sind, kardanisch mit diesen Antrieben verbunden sind, lassen sich auch hohe Reaktionskräfte aufnehmen, ohne daß dies zu einer Gefahr der Zerstörung des Antriebes führt. Durch geeignete Wahl der Winkelstellung der Lenkstangen zu den Linearantrieben lassen sich bei relativ großen Verstellbewegungen des Linearantriebes relativ kleine Winkelverstellungen in mehreren Achsen des Raumes sicher verstellen, wobei naturgemäß der Verstellweg des Linearantriebes rechnerisch in die jeweilige Korrektur der Winkelstellung umgesetzt werden muß. Eine sichere Abstützung der Reaktionskräfte bei gleichzeitig hoher Präzision bei der Verstellung um kleine Winkelinkremente wird hierbei dadurch möglich, daß die Lenkstangen und die Stützstange(n) an ein Polygon auf spannenden Punkten des zu orientierenden Bauteiles angreifen. Insgesamt eignet sich eine derartige Antriebseinrichtung bevorzugt für die Ausrichtung von Ionentriebwerken für eine weitestgehend geostationäre Positionierung eines Satelliten außerhalb des Äquators. In diesen Fällen ist eine regelmäßige bzw. sogar konstante Korrektur gefordert, um die Satelliten in Richtung des Meridian, d.h. in Nord-Süd-Richtung jeweils auf der nördlichen oder südlichen Hemisphäre zu halten, da ja die Ebene der Umlaufbahn die Äquatorebene durchsetzt. Ionentriebwerke haben eine relativ langsame Korrektur zur Folge, wobei in der Regel alle zwölf Stunden der Antrieb für etwa drei Stunden betätigt wird. In besonders einfacher Weise können die Linearantriebe von Schrittmotoren gebildet werden, welche einen Spindelantrieb betätigen. Bei Spindelantrieben läßt sich auf diese Weise ein relativ langer Verstellweg in relativ kleine Winkelverstellungen umsetzen, wobei eine hohe Betriebssicherheit dadurch erzielt wird, daß die Linearantriebe als Spindelantriebe ausgebildet sind, und daß die Lenkstangen um eine die Spindelachse schneidende oder kreuzende Achse schwenkbar mit dem Antrieb verbunden sind.

In konstruktiv besonders einfacher Weise kann die Ausbildung so getroffen werden, daß die Linearantriebe in einer gemeinsamen Ebene und vorzugsweise koaxial zueinander angeordnet sind, wobei vorzugsweise die gelenkigen Verbindungen der Lenkstangen und der Stützstangen mit dem zu orientierenden Bauteil als Kugelgelenke ausgebildet sind. Neben den Kardangelenken für die sichere Aufnahme der Reaktionskräfte im Bereich der Spindelantriebe wird somit durch Verwendung von Kugelgelenken an den übrigen Anlenkstellen ein hohes Maß an Präzision in der Krafteinleitung ohne Überbeanspruchung leicht bauender Lenk- bzw. Stützstangen gewährleistet.

Eine relativ einfache dreiachsige Korrektur und Ausrichtung läßt sich erfindungsgemäß dadurch verwirklichen, daß eine Stützstange und eine weitere gelenkige Abstützung des zu orientierenden Bauteiles gegenüber dem Satelliten vorgesehen ist. Mit Vorteil wirkt hierbei jeder Antrieb über einen Viergelenkbogen mit dem zu orientierenden Bauteil zusammen.

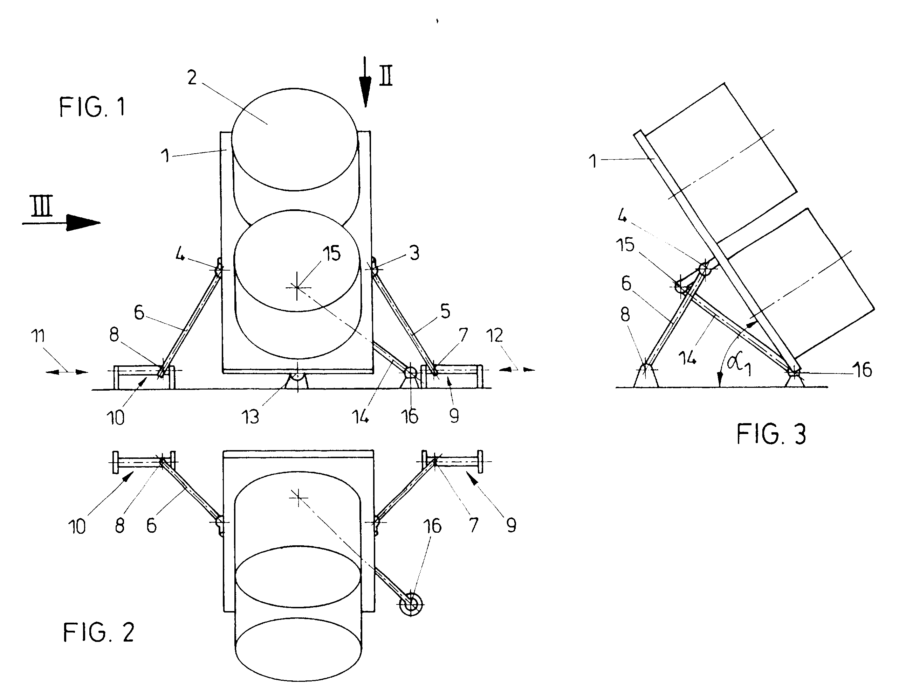

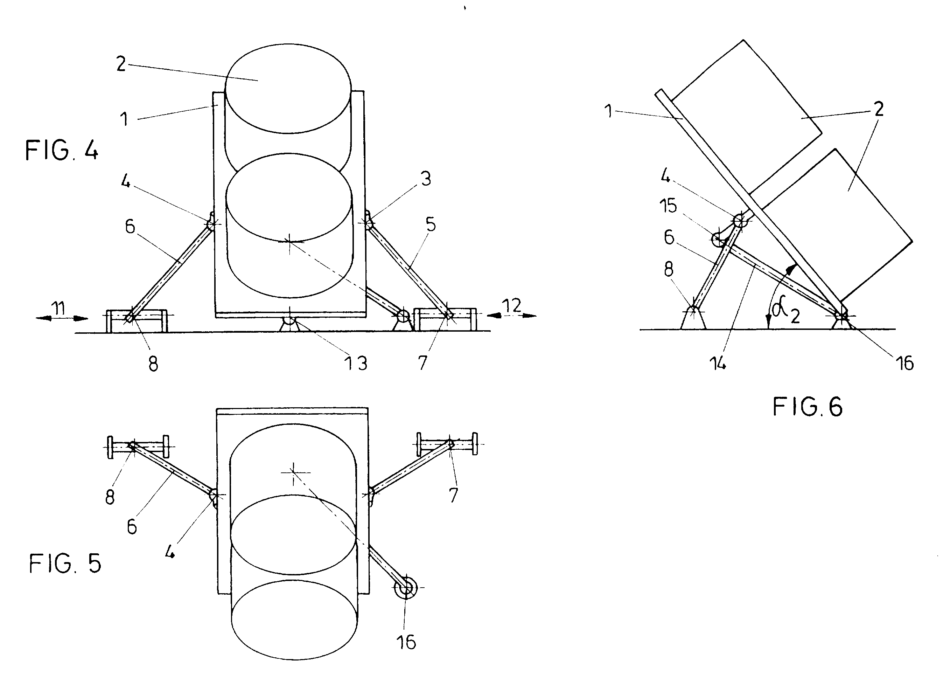

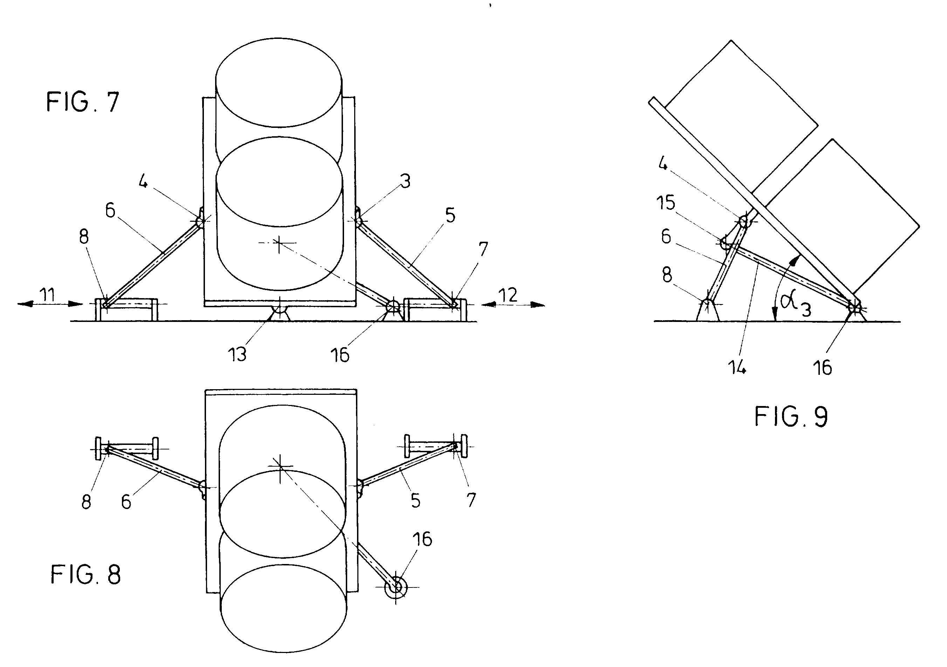

Die Erfindung wird nachfolgend anhand eines in der Zeichnung schematisch dargestellten Ausführungsbeispieles näher erläutert. In dieser zeigen Fig.1 eine erste Position der Antriebe, der Lenkstangen und der Abstützstangen relativ zu einem schematisch angedeuteten Ionenstrahltriebwerk, Fig.2 eine Ansicht in Richtung des Pfeiles II der Fig.1 und Fig.3 eine Seitenansicht in Richtung des Pfeiles III der Fig.1. Die Fig.4, 5 und 6, 7, 8 und 9, 10, 11 und 12 sowie 13, 14 und 15 zeigen jeweils verschiedene Positionen der Linearantriebe sowie die daraus resultierende Verstellung der Trägerplattform bzw. der Achse der Triebwerke.

In Fig.1 ist mit 1 schematisch die Tragplatte von Ionenstrahltriebwerken 2 bezeichnet. Die Plattform 1 ist über Kugelgelenke 3 und 4 mit Lenkstangen 5 und 6 verbunden. Die Lenkstangen 5 und 6 sind über ein Kardangelenk 7 bzw. 8 mit einem schematisch mit 9 bzw. 10 angedeuteten Spindelantrieb verbunden. Die Verstellung der die spindelachse kreuzenden bwz. schneidenden Kardangelenksachse der Kardangelenke 7 und 8 erfolgt hierbei in Richtung des Doppelpfeiles 11 bzw. 12. Die Achsen der Spindelantriebe 9 bzw. 10 sind bei der Darstellung in den Zeichnungsfiguren im wesentlichen koaxial gewählt.

Die Trägerplattform 1 ist zusätzlich über ein Kugelgelenk 13 sowie eine Stützstange 14 abgestützt, wobei die Stützstange 14 an der Trägerplatte 1 in einem Kugelgelenk 15 und am Satelliten in einem Kugelgelenk 16 abgestützt ist. In den übrigen Zeichnungsfiguren werden diese Bezugszeichen einheitlich weiter verwendet, sodaß nachfolgend nur auf die durch Verschiebung der Kardangelenke 7 bwz. 8 der Lenkstangen 5 bzw. 6 längs der Spindel in Richtung der Doppelpfeile 11 bzw. 12 erzielbaren unterschiedlichen Orientierungen eingegangen werden muß.

Die in Fig.1 bis 3 dargestellte Position, bei welcher die Kreuzgelenke 7 bzw. 8 in ihrer zueinander nächsten Position gezeichnet sind, führt zu einer Verschwenkung der Trägerplattform 1 relativ zu der durch die Abstützpunkte aufgespannten Ebene um einen Winkel α₁. Wenn, wie auf den Fig.4, 5 und 6 ersichtlich, die beiden Lenkstangen 5 und 6 längs der Spindel im Sinne der Doppelpfeile 11 bzw. 12 um im wesentlichen gleiche Stellwege nach auswärts verschoben werden, führt dies zur Einstellung eines Winkels α₂, wie er in Fig.6 dargestellt ist, welcher selbst wiederum kleiner ist als der Winkel α₁. Durch weitere Verschiebung der Lenkstangen 6 und 5 in Richtung der Doppelpfeile 11 und 12 in ihre auswärtige Position ergibt sich eine weitere Verringerung des in Fig.9 ersichtlichen Winkels α₃, so-daß eine dritte Winkelposition eingenommen werden kann. Insgesamt wird somit durch einen relativ leicht erfaßbaren und relativ großen Verstellweg längs der Spindeln in Richtung der Doppelpfeile 11 und 12 eine präzise Verschwenkung ausgehend vom Winkel α₁ bis in einen Winkel α₃ um kleine Winkel erzielt.

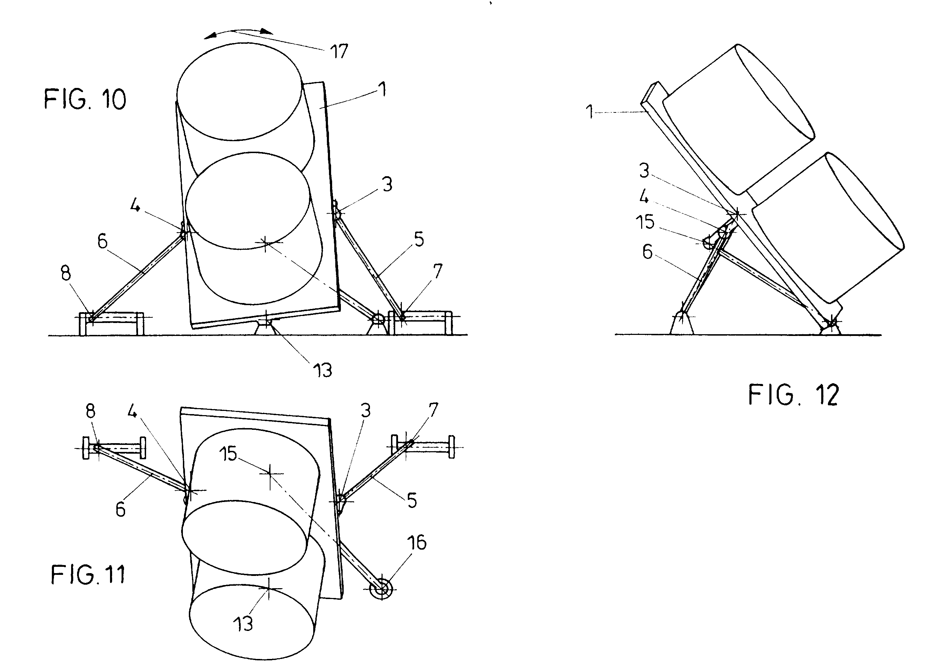

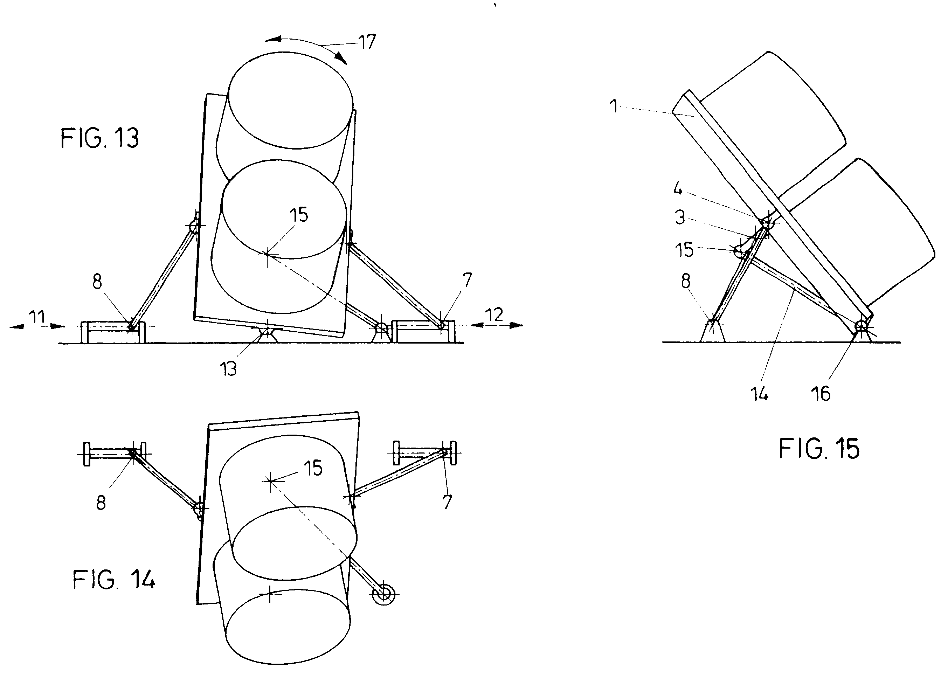

Aus den Fig.10 bis 15 ergibt sich nun, daß bei Verstellung der beiden Spindelantriebe in gleicher axialer Richtung eine Verschwenkung der Plattform 1 und damit der Achsen der Strahltriebwerke um eine weitere Achse erfolgt. Die Schwenkbewegung wird hier schematisch durch den gekrümmten Doppelpfeil 17 in den Fig.10 und 13 angedeutet, wobei aus der Darstellung in den Fig.12 und 15 nunmehr die Verschwenkung der Ebene des Trägers 1 aus der in den Fig.3, 6 bzw. 9 ersichtlichen Lage erkennbar ist. Analoges gilt naturgemäß für die Fig.12, wobei in Fig.10 die Lenkstange 5 in ihrer dem Träger benachbarte Postition mit ihrem Kardangelenk 7 verfahren ist, wohingegen die Lenkstange 6 sowie das zugehörige Kardangelenk 8 in die dem Träger 1 abgewandte Position nach auswärts verlagert ist, wodurch die Kippbewegung um das Kugelgelenk 13 und das Kugelgelenk 15 bewirkt wird. Insgesamt wird jeweils durch Betätigung der Spindelantriebe und Verschiebung der Kardangelenke 7 und 8 längs der Spindel eine mehrachsige Verstellung ermöglicht, wobei jeweils ein Viergelenkbogen für die Kraftübertragung zum Einsatz gelangt, wodurch große Reaktionskräfte mit leicht bauenden Teilen sicher aufgenommen werden können. Bedingt durch den großen möglichen Verstellweg von Linearantrieben lassen sich auch große Verstellwege in relativ kleine Winkelverstellungen sicher umsetzen.

## Patentansprüche

1. Antriebseinrichtung zum Verstellen von zu orientierenden Bauteilen eines Satelliten, wie z.B. Triebwerken, Antennen oder Solarzellen, dadurch gekennzeichnet, daß der Antrieb zwei unabhängig voneinander betreibbare Linearantriebe (9, 10) mit kardanisch (7, 8) an den Linearantrieben (9, 10) angelenkten Lenkstangen (5, 6), welche an verschiedenen Punkten des Bauteiles (1) über Kugelgelenke (3, 4) abgestützt oder kardanisch angelenkt sind, sowie wenigstens eine Stützstange (14) umfaßt, wobei die Stützstange(n) (14) sowohl am Satelliten als auch am zu orientierenden Bauteil (1) an verschiedenen Punkten über Kugelgelenke (15, 16) abgestützt oder kardanisch angelenkt sind und/oder der zu orientierende Bauteil (1) direkt am Satelliten in einem Punkt über ein Kugelgelenk (13) abgestützt oder kardanisch angelenkt ist und daß die Lenkstangen (5, 6) und die Stützstange(n) (14) an ein Polygon aufspannenden Punkten des zu orientierenden Bauteiles (1) angreifen, wobei die Winkelstellung der Lenkstangen (5, 6) untereinander und im bezug auf die Linearantriebe (9, 10) so gewählt ist, daß Winkelverstellungen des Bauteiles gegenüber dem Satelliten um mehrere Achsen möglich sind.

2. Antriebseinrichung nach Anspruch 1, dadurch gekennzeichnet, daß die Linearantriebe (9, 10) als Spindelantriebe ausgebildet sind, und daß die Lenkstangen (5, 6) um eine die Spindelachse schneidende oder kreuzende Achse schwenkbar mit dem Antrieb (9, 10) verbunden sind.

3. Antriebseinrichtung nach Anspruch 1 oder 2, dadurch gekennzeichnet, daß die Linearantriebe (9, 10) in einer gemeinsamen Ebene und vorzugsweise koaxial zueinander angeordnet sind.

4. Antriebseinrichtung nach Anspruch 1, 2 oder 3, dadurch gekennzeichnet, daß die gelenkigen Verbindungen (3, 4, 15) der Lenkstangen (5, 6) und der Stützstangen (14) mit dem zu orientierenden Bauteil (1) als Kugelgelenke ausgebildet sind.

5. Antriebseinrichtung nach einem der Ansprüche 1 bis 4, dadurch gekennzeichnet, daß eine Stützstange (14) und eine weitere gelenkige Abstützung (13) des zu orientierenden Bauteiles (1) gegenüber dem Satelliten vorgesehen ist.

6. Antriebseinrichtung nach einem der Ansprüche 1 bis 5, dadurch gekennzeichnet, daß die zu orientierenden Bauteile (1) von Ionentriebwerken gebildet sind.

7. Antriebseinrichtung nach einem der Ansprüche 1 bis 6, dadurch gekennzeichnet, daß jeder Antrieb (9, 10) über einen Viergelenkbogen mit dem zu orientierenden Bauteil (1) zusammenwirkt.

## Claims

1. Drive unit for adjusting satellite components requiring orientation, such as, e.g. driving gears, antennas or solar cells, characterized in that the drive comprises two linear drives (9, 10) which can be operated independently of each other and have, cardanically coupled on the linear drives (9, 10), steering rods (5, 6) which are cardanically coupled or supported via globe joints (3, 4) on various points of the component (1), and at least one support rod (14), the support rod(s) (14) being cardanically coupled or supported via globe joints (15, 16) on various points both on the satellite and on the component (1) requiring orientation and/or the component (1) requiring orientation being cardanically coupled or supported in one point via a globe joint (13) directly on the satellite, and in that the steering rods (5, 6) and the support rod(s) (14) act upon points clamping a polygon on the component (1) requiring orientation, the angle position of the steering rods (5, 6) among each other and in relation to the linear drives (9, 10) being chosen so that angle adjustments of the component against the satellite are possible over several axes.

2. Drive unit according to claim 1, characterized in that the linear drives (9, 10) are constructed as spindle drives and in that the steering rods (5, 6) are pivotably connected with the drive (9, 10) about an axis intersecting or crossing the spindle axis.

3. Drive unit according to claim 1 or 2, characterized in that the linear drives (9, 10) are arranged in a common plane and preferably coaxially towards each other.

4. Drive unit according to claim 1, or 3, characterized in that the hinged connections (3, 4, 15) of the steering rods (5, 6) and the support rods (14) with the component (1) requiring orientation are constructed as globe joints.

5. Drive unit according to one of claims 1 to 4, characterized in that a support rod (14) and another hinged support (13) of the component (1) requiring orientation is provided against the satellite.

6. Drive unit according to one of claims 1 to 5, characterized in that the components (1) requiring orientation are formed by ion engines.

7. Drive unit according to one of claims 1 to 6, characterized in that each drive (9, 10) cooperates with the component (1) requiring orientation via a four-joint arch.

## Revendications

1. Dispositif de commande pour ajuster des composants à orienter d'un satellite, par exemple des propulseurs, des antennes ou des piles solaires, ***caractérisé en ce que*** l'entraînement comprend deux entraînements linéaires (9, 10) pouvant être actionnés indépendamment l'un de l'autre avec des barres directrices (5, 6) articulées par des cardans sur les entraînements linéaires (9, 10). barres qui s'appuient ou sont articulées par cardans en divers points du composant (1) par l'intermédiaire de jonctions sphériques (3, 4), ainsi qu'au moins une barre d'appui (14). la ou les barre(s) d'appui (14) s'appuyant ou étant articulée(s) à la fois sur le satellite et sur le composant (1) à orienter en divers points par l'intermédiaire de jonctions sphériques (15, 16) et/ou le composant à orienter (1) s'appuyant ou étant articulé directement sur le satellite en un point par l'interniédiaire d'une jonction sphérique (13), et ***en ce que*** les barres directrices (5. 6) et la ou les barre(s) d'appui (14) se mettent en prise en des points délimitant un polygone du composant (1) à orienter. la position angulaire des barres directrices (5, 6) l'une par rapport à l'autre et par rapport aux entraînements linéaires (9, 10) étant choisie de telle façon que des ajustements angulaires du composant par rapport au satellite soient possibles autour de plusieurs axes.

2. Dispositif de commande selon la Revendication 1. **caractérisé en ce que** les entraînements linéaires (9, 10) sont conformés en entraînements à vis et ***en ce que*** les barres directrices (5, 6) sont reliées à l'entraînement (9,10) de manière pivotante autour d'un axe coupant ou croisant l'axe de la vis.

3. Dispositif de commande selon la Revendication 1 ou 2, ***caractérisé en ce que*** les entraînements linéaires (9, 10) sont placés dans un plan commun et de préférence en position coaxiale l'un par rapport à l'autre.

4. Dispositif de commande selon la Revendication 1, 2 ou 3, ***caractérisé en ce que*** les assemblages articulés (3. 4, 15) des barres directrices (5. 6) et des barres d'appui (14) avec le composant (1) à orienter sont conformés en jonctions sphériques.

5. Dispositif de commande selon l'une quelconque des Revendications 1 à 4, ***caractérisé en ce qu'****il* est prévu par rapport au satellite une barre d'appui (14) et un autre appui articulé (13) du composant (1) à orienter.

6. Dispositif de commande selon l'une quelconque des Revendications 1 à 5, ***caractérisé en ce que*** les composants (1) à orienter sont formés de propulseurs ioniques.

7. Dispositif de commande selon l'une quelconque des Revendications 1 à 6, ***caractérisé*** *e****n ce que*** chaque entraînement (9, 10) coopère avec le composant (1) à orienter par l'intermédiaire d'un quadrilatère articulé.
